# EUROPEAN PATENT SPECIFICATION

(11) **EP 3 618 548 B1**
(45) Date of publication and mention of the grant of the patent: **20.07.2022**
(21) Application number: 17914920.8
(22) Date of filing: 11.08.2017
(51) Int. Cl.: H04W 72/08, H04W 88/06

(54) **WIRELESS COMMUNICATION METHOD AND DEVICE**
DRAHTLOSKOMMUNIKATIONSVERFAHREN UND -VORRICHTUNG
PROCÉDÉ ET DISPOSITIF DE COMMUNICATION SANS FIL

(30) Priority: 23.06.2017 WO PCT/CN2017/089687
(43) Date of publication of application: 04.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Zhi, Dongguan Guangdong 523860 (CN); YANG, Ning, Dongguan Guangdong 523860 (CN); TANG, Hai, Dongguan Guangdong 523860 (CN)
(74) Representative: Manitz Finsterwald Patent- und Rechtsanwaltspartnerschaft mbB
(86) International application number: PCT/CN2017/097047
(87) International publication number: WO 2018/232898

(56) References cited:
- WO-A1-2010/030938
- WO-A1-2014/067131
- CN-A- 104 756 578
- CN-A- 105 191 188
- US-A1- 2013 194 984
- US-A1- 2015 245 365
- US-A1- 2015 245 365
- VIVO: "Interference analysis for LTE-NR co-existence", 3GPP DRAFT; R1-1710384_INTERFERENCE ANALYSIS FOR LTE-NR CO-EXISTENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; F , vol. RAN WG1, no. Qingdao, P.R. China; 20170627 - 20170630 17 June 2017 (2017-06-17), XP051304989, Retrieved from the Internet: URL:http://www.3gpp.org/ftp/tsg_ran/WG1_RL 1/TSGR1_AH/NR_AH_1706/Docs/ [retrieved on 2017-06-17]
- VIVO: "Interference analysis for LTE-NR co-existence", 3GPP TSG-RAN WG1 NR ad-hoc #2, no. R1-1710384, 17 June 2017 (2017-06-17), XP051304989,

## Description

This application claims priority to International Application No. PCT/CN2017/089687, entitled "Wireless Communication Method and Device", filed on June 23, 2017.

### TECHNICAL FIELD

The present application relates to the field of communication and, in particular, to a wireless communication method and a terminal device.

### BACKGROUND

For a terminal device, when a transmitter transmits a signal, if a receiver receives a signal at the same time, and the signal transmitted by the terminal device is in a same frequency as the received signal, the signal transmitted by the terminal device may interfere with the co-frequency signal received by the terminal device. This phenomenon can be referred to as self-interference, and the generation of the self-interference can degrade communication performance.

In a future communication system, requirements for communication performance are getting higher and higher.

How to avoid self-interference of the terminal device as much as possible is an urgent problem to be solved.

US 2015/245365 A1 discloses a mechanism for controlling communications conducted in multiple frequency bands, in particular for controlling interference caused by intermodulation distortion. WO 2010/030938 A1 discloses systems and methodologies that facilitate avoiding interference with disparate communication technologies when allocating and/or utilizing wireless communication resources. US 2013/194984 A1 discloses a method and an apparatus for handling full-duplex interference.

### SUMMARY

The present invention is defined in the independent claims. Embodiments of the present application provides a wireless communication method and device, which can avoid self-interference of a terminal device and improve a performance of a communication system as far as possible.

In a first aspect, a wireless communication method is provided, including:
determining, by a terminal device, that a first signal and a second signal generate self-interference or have a possibility of generating self-interference on the terminal device, where the first signal is a signal transmitted between the terminal device and a first network device using a first carrier, and the second signal is a signal transmitted between the terminal device and a second network device using a second carrier; and
transmitting, by the terminal device, first information to the first network device, where the first information is configured to indicate that the first signal and the second signal generate self-interference or have the possibility of generating self-interference on the terminal device, and indicate a condition of a signal transmission between the terminal device and the second network device using the second carrier.

With reference to the first aspect, in a possible implementation manner of the first aspect, the first signal is an uplink signal transmitted by the terminal device to the first network device using the first carrier, and the second signal is a downlink signal from the second network device received by the terminal device using the second carrier; or
the first signal is a downlink signal from the first network device received by the terminal device using the first carrier, and the second signal is an uplink signal transmitted by the terminal device to the second network device using the second carrier.

In combination with the first aspect or any one of the above possible implementation manners, in another possible implementation manner of the first aspect, the first network device is a network device in a new wireless NR system, and the second network device is a network device in a long term evolution LTE system; or
the first network device is a network device in the NR system, and the second network device is a network device in the NR system.

In combination with the first aspect or any one of the above possible implementation manners, in another possible implementation manner of the first aspect, the determining, by the terminal device, that a first signal and a second signal generate self-interference or have a possibility of generating self-interference on the terminal device, includes:
determining, by the terminal device, that the first signal and the second signal generate self-interference or have the possibility of generating self-interference on the terminal device according to a preset list, where the preset list is configured to indicate a self-interference condition between multiple frequency bands.

In combination with the first aspect or any one of the above possible implementation manners, in another possible implementation manner of the first aspect, the preset list is specifically configured to indicate:
a frequency band combination that generates self-interference or has the possibility of generating self-interference; or
the frequency band combination that generates self-interference or has the possibility of generating self-interference, and a frequency range that is interfered with or is possible to be interfered with; or
the frequency band combination that generates self-interference or has the possibility of generating self-interference, the frequency range that is interfered with or is possible to be interfered with, and an interference type; or
the frequency band combination that generates self-interference or has the possibility of generating self-interference, and the interference type; or
the interference type, and the frequency range that is interfered with or is possible to be interfered with.

In combination with the first aspect or any one of the above possible implementation manners, in another possible implementation manner of the first aspect, the determining, by the terminal device, that a first signal and a second signal generate self-interference or have a possibility of generating self-interference on the terminal device, includes:
determining, by the terminal device, that the first signal and the second signal generate self-interference or have the possibility of generating self-interference on the terminal device, through a numerical relationship between a frequency band occupied by the first carrier and a frequency band occupied by the second carrier.

In combination with the first aspect or any one of the above possible implementation manners, in another possible implementation manner of the first aspect, the determining, by the terminal device, that a first signal and a second signal generate self-interference or have a possibility of generating self-interference on the terminal device, includes:
determining, by the terminal device, that the first signal and the second signal generate self-interference on the terminal device by means of interference detection.

In combination with the first aspect or any one of the above possible implementation manners, in another possible implementation manner of the first aspect, the first information is specifically configured to indicate at least one of the following:
a connectivity manner of a communication connectivity between the terminal device and the second network device using the second carrier;
information of a frequency at which the second signal generates interference or has the possibility of generating interference to the first signal, and/or information of a frequency at which the second signal is interfered with or is possible to be interfered with by the first signal;
duplex information of a communication between the terminal device and the second network device using the second carrier; and
scheduling information of scheduling by the second network device for the terminal device on the second carrier.

In combination with the first aspect or any one of the above possible implementation manners, in another possible implementation manner of the first aspect, the connectivity manner is a dual connectivity manner or an independent connectivity manner.

In combination with the first aspect or any one of the above possible implementation manners, in another possible implementation manner of the first aspect, the duplex information includes a duplex mode and/or configuration information of the duplex mode.

In combination with the first aspect or any one of the above possible implementation manners, in another possible implementation manner of the first aspect, the scheduling information includes uplink scheduling information and/or downlink scheduling information.

In combination with the first aspect or any one of the above possible implementation manners, in another possible implementation manner of the first aspect, the uplink scheduling information includes at least one of the following:
a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In combination with the first aspect or any one of the above possible implementation manners, in another possible implementation manner of the first aspect, the downlink scheduling information includes at least one of the following:
a time-frequency resource where a downlink control channel is located, a time-frequency resource where a downlink data channel is located, a period of a downlink semi-persistent transmission, a time-frequency resource of a downlink semi-persistent transmission configuration and an MCS adopted for downlink transmission.

In combination with the first aspect or any one of the above possible implementation manners, in another possible implementation manner of the first aspect, the first signal is a signal transmitted between the terminal device and multiple first network devices using multiple first carriers; and
the transmitting, by the terminal device, first information to the first network device, includes:
transmitting, by the terminal device, the first information to at least one first network device of the multiple first network devices.

In combination with the first aspect or any one of the above possible implementation manners, in another possible implementation manner of the first aspect, the first information is further configured to indicate a condition of a signal transmission of other network device of the multiple network devices that is not a receiving end of the first information using the corresponding first carrier.

In combination with the first aspect or any one of the above possible implementation manners, in another possible implementation manner of the first aspect, the second signal is a signal transmitted between the terminal device and multiple second network devices using multiple second carriers; and
the first information is configured to indicate a condition of signal transmissions between the terminal device and the multiple second network devices using the multiple second carriers.

In a second aspect, a wireless communication method is provided, including:
receiving, by a first network device, first information transmitted by a terminal device, where the first information is configured to indicate that a first signal and a second signal generate self-interference or have a possibility of generating self-interference on the terminal device, and indicate a condition of a transmission of the second signal between the terminal device and a second network device using a second carrier, and where the first signal is a signal transmitted between the terminal device and the first network device using a first carrier, and the second signal is a signal transmitted between the terminal device and the second network device using the second carrier; and
configuring, by the first network device, the terminal device, and/or negotiating with the second network device a configuration by the second network device for the terminal device according to the first information.

In combination with the second aspect, in a possible implementation manner of the second aspect, the first information is specifically configured to indicate at least one of the following:
a connectivity manner of a communication connectivity between the terminal device and the second network device using the second carrier;
information of a frequency at which the second signal generates interference or has the possibility of generating interference to the first signal, and/or information of a frequency at which the second signal is interfered with or is possible to be interfered with by the first signal;
duplex information of a communication between the terminal device and the second network device using the second carrier; and
scheduling information of scheduling by the second network device for the terminal device on the second carrier.

In combination with the second aspect or any one of the above possible implementation manners, in another possible implementation manner of the second aspect, the connectivity manner is a dual connectivity manner or an independent connectivity manner.

In combination with the second aspect or any one of the above possible implementation manners, in another possible implementation manner of the second aspect, the duplex information includes a duplex mode and/or configuration information of the duplex mode.

In combination with the second aspect or any one of the above possible implementation manners, in another possible implementation manner of the second aspect, the scheduling information includes uplink scheduling information and/or downlink scheduling information.

In combination with the second aspect or any one of the above possible implementation manners, in another possible implementation manner of the second aspect, the uplink scheduling information includes at least one of the following:
a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In combination with the second aspect or any one of the above possible implementation manners, in another possible implementation manner of the second aspect, the downlink scheduling information includes at least one of the following:
a time-frequency resource where a downlink control channel is located, a time-frequency resource where a downlink data channel is located, a period of a downlink semi-persistent transmission, a time-frequency resource of a downlink semi-persistent transmission configuration and an MCS adopted for downlink transmission.

In combination with the second aspect or any one of the above possible implementation manners, in another possible implementation manner of the second aspect, the first information indicates that a duplex mode between the second network device and the terminal device is TDD having a first configuration; and
the configuring, by the first network device, the terminal device, and/or negotiating with the second network device a configuration by the second network device for the terminal device according to the first information, includes:
configuring a duplex mode of a transmission between the first network device and the terminal device using the first carrier as the TDD with the first configuration.

In combination with the second aspect or any one of the above possible implementation manners, in another possible implementation manner of the second aspect, the first information indicates that a duplex mode between the second network device and the terminal device is FDD; and
the configuring, by the first network device, the terminal device, and/or negotiating with the second network device a configuration by the second network device for the terminal device according to the first information, includes:
negotiating, by the first network device, with the second network device to configure a connectivity between the second network device and the terminal device using the second carrier as a half-duplex mode, and negotiating that a transmission state between the first network device and the second network with the terminal device using the first carrier and the second carrier respectively is a synchronous transmission and reception state.

In a third aspect, which is not claimed in the current invention, a wireless communication method is provided, including:
determining, by a terminal device, whether a downlink communication or an uplink communication needs to be abandoned when the downlink communication and the uplink communication need to be performed simultaneously on different carriers; and
abandoning, by the terminal device, the downlink communication or the uplink communication when the downlink communication or the uplink communication needs to be abandoned.

In combination with the third aspect in a possible implementation manner of the third aspect, the determining whether a downlink communication or an uplink communication needs to be abandoned, includes:
determining, by the terminal device, whether the downlink communication and the uplink communication generate self-interference; and
determining, by the terminal device, whether the downlink communication or the uplink communication needs to be abandoned according to whether the downlink communication and the uplink communication generate self-interference.

In combination with the third aspect or any one of the above possible implementation manners, in another possible implementation manner of the third aspect, the determining, by the terminal device, whether the downlink communication and the uplink communication generate self-interference, includes:
determining, by the terminal device, whether the downlink communication and the uplink communication generate self-interference according to a combination of a frequency band of the downlink communication and a frequency band of the uplink communication or a current time.

In combination with the third aspect or any one of the above possible implementation manners, in another possible implementation manner of the third aspect, the determining, by the terminal device, whether the downlink communication and the uplink communication generate self-interference according to a current time, includes:
determining, by the terminal device, whether the downlink communication and the uplink communication generate self-interference according to the current time in combination with a time period configured by the network device in which no self-interference is generated.

In combination with the third aspect or any one of the above possible implementation manners, in another possible implementation manner of the third aspect, the determining, by the terminal device, whether the downlink communication and the uplink communication generate self-interference according to a combination of a frequency band of the downlink communication and a frequency band of the uplink communication, includes:
determining, by the terminal device, whether the downlink communication and the uplink communication generate self-interference according to the combination of the frequency band of the downlink communication and the frequency band of the uplink communication in combination with a frequency band combination that does not generate self-interference or a frequency band combination that is possible to generate self-interference configured by the network device.

In combination with the third aspect or any one of the above possible implementation manners, in another possible implementation manner of the third aspect, the determining whether a downlink communication or an uplink communication needs to be abandoned, includes:
determining whether the downlink communication or the uplink communication needs to be abandoned according to a communication that needs to be abandoned indicated by the network device.

In combination with the third aspect or any one of the above possible implementation manners, in another possible implementation manner of the third aspect, the abandoning, by the terminal device, the downlink communication or the uplink communication when the downlink communication or the uplink communication needs to be abandoned, includes:
determining a communication that needs to be abandoned in the downlink communication and the uplink communication according to priority information of communication; and
abandoning, by the terminal device, the determined communication that needs to be abandoned.

In combination with the third aspect or any one of the above possible implementation manners, in another possible implementation manner of the third aspect, the priority information indicates that:
a priority of a communication in an LTE system is higher than a priority in a new wireless system; and/or
a priority of an uplink communication is higher than a priority of a downlink communication; and/or
a priority of a communication transmitting control information is higher than a priority of a communication transmitting data; and/or
a priority of a communication with a long time interval between two communications is higher than a priority of a communication with a short time interval between two communications.

In combination with the third aspect or any one of the above possible implementation manners, in another possible implementation manner of the third aspect, the priority information is configured to indicate that:
a priority of a communication in an LTE system is higher than a priority of an uplink communication in an NR system; and
the uplink communication in the NR system has a higher priority than a downlink communication in the NR system.

In combination with the third aspect or any one of the above possible implementation manners, in another possible implementation manner of the third aspect, the priority information is configured for that:
a priority of a transmission of an PUCCH is higher than a priority of a downlink paging or system information transmission in an NR system;
the priority of the downlink paging or system information transmission in the NR system is higher than a priority of a transmission of an PUSCH in the NR system; and
the transmission of the PUSCH in the NR system has a higher priority than a transmission of an PDSCH in the NR system.

In combination with the third aspect or any one of the above possible implementation manners, in another possible implementation manner of the third aspect, the method further includes:
when the downlink communication or uplink communication is abandoned, transmitting, by the terminal device, a notification signaling to the network device for indicating that the downlink communication or the uplink communication is abandoned.

In combination with the third aspect or any one of the above possible implementation manners, in another possible implementation manner of the third aspect, the notification signaling is a NACK signaling when the downlink communication is abandoned.

In combination with the third aspect or any one of the above possible implementation manners, in another possible implementation manner of the third aspect, the notification signaling is further configured to indicate scheduling information of a communication that is not abandoned.

In combination with the third aspect or any one of the above possible implementation manners, in another possible implementation manner of the third aspect, the method further includes:
re-performing the downlink communication or the uplink communication that is abandoned after the downlink communication or the uplink communication is abandoned.

In combination with the third aspect or any one of the above possible implementation manners, in another possible implementation manner of the third aspect, the re-performing the downlink communication or the uplink communication that is abandoned, includes:
re-performing the downlink communication or the uplink communication according to scheduling of the network device.

In a fourth aspect, which is not claimed in the current invention, a wireless communication method is provided, including:
determining, by a network device, a frequency band combination that does not generate self-interference or a frequency band combination that generates self-interference or is possible to generate self-interference; and
transmitting, by the network device, indication information to a terminal device for indicating the frequency band combination that does not generate self-interference or the frequency band combination that generates self-interference or is possible to generate self-interference.

In combination with the fourth aspect, in a possible implementation manner of the fourth aspect, the indication information is further configured to indicate a duration of the frequency band combination that does not generate self-interference or a frequency band combination that generates self-interference or is possible to generate self-interference.

In combination with the fourth aspect or any one of the above possible implementation manners, in another possible implementation manner of the fourth aspect, the method further includes:
scheduling, by the network device, the terminal device by using the frequency band combination that does not generate self-interference.

In a fifth aspect, which is not claimed in the current invention, a wireless communication method is provided, including:
determining, by a network device, a frequency band combination that does not generate self-interference; and
using the combination to schedule a terminal device in a first time period.

In combination with the fifth aspect, in a possible implementation manner of the fifth aspect, the method further includes:
transmitting indication information to the terminal device, where the indication information is configured to indicate that an uplink communication or a downlink communication does not need to be abandoned in the first time period.

In a sixth aspect, which is not claimed in the current invention, a wireless communication method is provided, including:
determining an uplink communication or a downlink communication that generates or is possible to generate self-interference; and
instructing a terminal device to abandon the uplink communication or the downlink communication.

In combination with the sixth aspect, in a possible implementation manner of the sixth aspect, the uplink communication and the downlink communication are scheduled by different network devices; and
the instructing a terminal device to abandon the uplink communication or the downlink communication, includes:
instructing, by a first network device, the terminal device to abandon a communication scheduled by a second network device.

In a seventh aspect, which is not claimed in the current invention, a terminal device is provided for performing the method in the first or third aspect or any possible implementation thereof. Specifically, the terminal device includes functional modules for performing the method in the first or third aspect or any possible implementation thereof.

In an eighth aspect, which is not claimed in the current invention, a network device is provided for performing the method in the second, fourth, fifth or sixth aspect or any possible implementation thereof. Specifically, the terminal device includes functional modules for performing the method in the second, fourth, fifth or sixth aspect or any possible implementation thereof.

In a ninth aspect, which is not claimed in the current invention, a terminal device is provided, including a processor, a memory, and a transceiver. Through an internal connectivity path, the processor, the memory, and the transceiver communicate with each other, transmit control and/or data signals, such that the terminal device performs the method in the first or third aspect or any possible implementation thereof.

In a tenth aspect, which is not claimed in the current invention, a network device is provided, including a processor, a memory, and a transceiver. Through an internal connectivity path, the processor, the memory, and the transceiver communicate with each other, transmit control and/or data signals, such that the network device performs the method in the second, fourth, fifth or sixth aspect or any possible implementation thereof.

In an eleventh aspect, which is not claimed in the current invention, a computer readable medium is provided for storing a computer program, the computer program including instructions for performing any one of the methods or any possible implementation described above.

In a twelfth aspect, which is not claimed in the current invention, a computer program product is provided, including instructions which, when executed on a computer, cause the computer to perform any one of the methods or the method in any possible implementation described above.

Therefore, in the embodiments of the present application, when a terminal device determines that a first signal (a signal transmitted between the terminal device and a first network device using a first carrier) and a second signal (a signal transmitted between the terminal device and a second network device using second first carrier) generate self-interference or have a possibility of generating self-interference on the terminal device, the terminal device transmits first information to the first network device, where the first information is configured to indicate that the first signal and the second signal generate self-interference or have the possibility of generating self-interference on the terminal device, and indicate a condition of a signal transmission between the terminal device and the second network device using the second carrier, which may enable the second network device to avoided its signal transmission scheduled for the terminal device from interfering with a signal transmission scheduled by the first network device for the terminal device, or enable the second network device to avoid its signal transmission scheduled for the terminal device from being interfered with by the signal transmission scheduled by the first network device for the terminal device.

### BRIEF DESCRIPTION OF DRAWINGS

The appended drawings required in the description of the embodiments or the prior art are briefly described below to illustrate the technical solution of the embodiments of the present application more clearly. Obviously, the appended drawings in the following description are only some embodiments of the present application. Those skilled in the art can obtain other drawings according to these appended drawings without any creative efforts.
FIG. 1 is a schematic diagram of a wireless communication system according to an embodiment of the present application;
FIG.2 is a schematic flowchart of a wireless communication method according to an embodiment of the present application;
FIG. 3 is a schematic flowchart of a wireless communication method according to an embodiment of the present application;
FIG. 4 is a schematic flowchart of a wireless communication method according to an embodiment of the present application;
FIG. 5 is a schematic flowchart of a wireless communication method according to an embodiment of the present application;
FIG. 6 is a schematic flowchart of a wireless communication method according to an embodiment of the present application;
FIG. 7 is a schematic flowchart of a wireless communication method according to an embodiment of the present application;
FIG. 8 is a schematic block diagram of a terminal device according to an embodiment of the present application;
FIG. 9 is a schematic block diagram of a network device according to an embodiment of the present application;
FIG. 10 is a schematic block diagram of a system chip according to an embodiment of the present application; and
FIG. 11 is a schematic block diagram of a communication device according to an embodiment of the present application.

### DESCRIPTION OF EMBODIMENTS

The technical solutions in the embodiments of the present application will be described below in combination with the appended drawings in the embodiments of the present application. Obviously, the described embodiments are part of the embodiments of the present application, but not all of them. All other embodiments obtained by those skilled in the art based on the embodiments of the present application without any creative efforts shall fall within the protection scope of the present application.

The technical solutions of the embodiments of the present application can be applied to various communication systems, such as global system of mobile communication (GSM) system, code division multiple access (CDMA) system, wideband code division multiple access (WCDMA) system, general packet radio service (GPRS), long term Evolution (LTE) system, LTE frequency division duplex (FDD) system, LTE time division duplex (TDD), universal mobile telecommunication system (UMTS), worldwide interoperability for microwave access (WiMAX) communication system, or future 5G system (which is also referred as New Radio (NR) system.

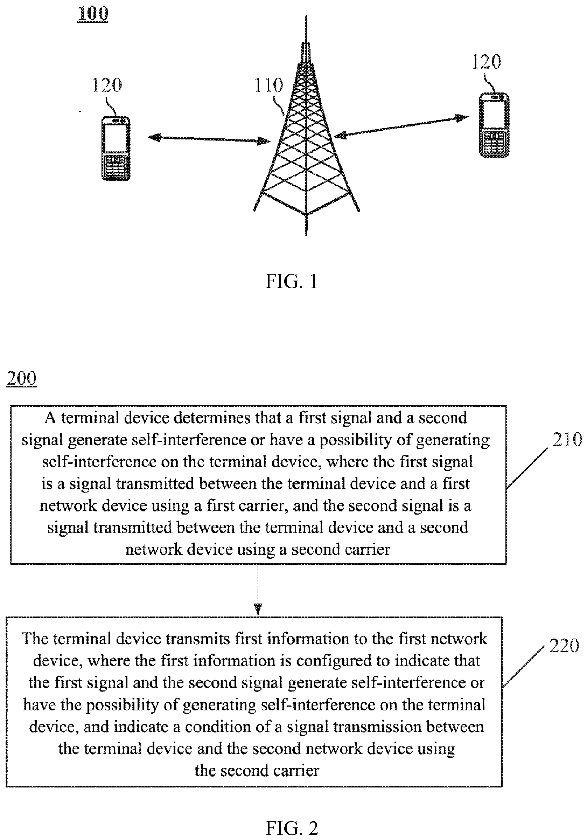

FIG. 1 illustrates wireless communication system 100 to which the embodiment of the present application applies. The wireless communication system 100 may include network device 110. The network device 100 may be a device that communicates with a terminal device. The network device 100 may provide communication coverage for a specific geographic area, and may communicate with terminal devices (e.g., UEs) located within the coverage area. In an embodiment, the network device 100 may be a base transceiver station (BTS) in the GSM system or in the CDMA system, or may be a NodeB (NB) in the WCDMA system, or may be an Evolutional Node B (eNB or eNodeB) in the LTE system, or may be a wireless controller in a cloud radio access network (CRAN), or the network device may be a relay station, an access point, an vehicle-mounted device, a wearable device, a network side device in the future 5G network or a network device in the future evolutional public land mobile network (PLMN), etc.

The wireless communication system 100 also includes at least one terminal device 120 located within the coverage area of network device 110. The terminal device 120 may be mobile or fixed. In an embodiment, the terminal device 120 may refer to an access terminal, a user equipment (UE), a subscriber unit, a subscriber station, a mobile station, a mobile phone, a remote station, a remote terminal, a mobile device, a user terminal, a terminal, a wireless communication device, a user agent or a user device. The access terminal may be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, a vehicle-mounted device, a wearable device, a terminal device in the future 5G network, or a terminal device in the future evolutional PLMN, etc.

In an embodiment, device to device (D2D) communication may be performed between the terminal devices 120.

In an embodiment, the 5G system or network may also be referred to as a New Radio (NR) system or network.

FIG. 1 exemplarily illustrates one network device and two terminal devices. In an embodiment, the wireless communication system 100 may include a plurality of network devices, and a coverage area of each network device may include other numbers of terminal devices therein, which is not limited in the embodiments of the present application.

In an embodiment, the wireless communication system 100 may further include other network entities, such as a network controller, a mobility management entity, or the like, which is not limited in the embodiments of the present application.

It should be understood that terms "system" and "network" are often used interchangeably herein. The term "and/or" used herein merely refers to an association relationship describing associated objects, indicating that there may be three relationships, for example, A and/or B may indicate three cases: A exists separately, both A and B exist, or B exists separately. In addition, the character "/" used herein generally indicates that there is a "or" relationship between contextual objects.

In an embodiment, when a transmitter of a terminal device transmits a signal, if a receiver receives a signal at the same time, and the signal transmitted by the terminal device is in a same frequency as the received signal, the signal transmitted by the terminal device may interfere with the co-frequency signal received by the terminal device. This phenomenon can be referred to as self-interference, and the generation of the self-interference can degrade a communication performance.

In an embodiment, self-interference can be divided into three types: harmonic interference, harmonic mixing interference, and intermodulation interference. Each type of self-interference can also be subdivided into smaller granularity types. For example, for intermodulation interference, when orders of intermodulation signals are different, it can be divided into different types of interference. For example, for harmonic interference, when frequency multiplications of signals are different when harmonic interference occurs, it can be divided into different types of interference.

In the following, several types of self-interference are exemplified by the terminal device simultaneously operating on a carrier F1 and a carrier F2, where it is assumed that the carrier F1 operates in a low frequency band and the carrier F2 operates in a high frequency band.

As a possibility, a frequency of a certain order intermodulation signal (IM) of an uplink carrier of F1 and an uplink carrier of F2 overlaps or partially overlaps with a frequency of a downlink signal of carrier F3. Then, the carriers F1 and F2 form intermodulation interference to F3. Here, F3 may be one of the carriers F1 or F2, or another carrier different from F1/F2 (in this case, the terminal device simultaneously operates on more than two carriers).

For example, the terminal device is configured with both LTE carriers of Band 1 and Band 7 and a NR carrier (3400-3800 MHz), then if an UL of band 7 and an UL of the NR are simultaneously transmitted, a 5th-order intermodulation signal generated will affect a sensitivity of a DL receiver of band 1.

As a possibility, a frequency multiplication of the uplink carrier of F1 overlaps or partially overlaps with a frequency of a downlink signal of F2. Then, the carrier F1 forms harmonic interference to F2.

For example, LTE Band 3 has an uplink of 1710-1785 MHz and a range of its second-order harmonic is 3420-3570 MHz. If a terminal simultaneously performs LTE uplink transmission on band 3 and DL reception on NR frequency band 3400-3800 MHz, then the second-order harmonic may interfere with a sensitivity of a NR DL receiver.

As a possibility, a frequency multiplication of a downlink carrier of F1 overlaps or partially overlaps with a frequency of an uplink signal of F2 (and its adjacent frequency). Then, carrier F2 forms harmonic mixing interference to F1.

For example, LTE Band 3 has a downlink of 1805-1880 MHz, and a range of its second-order harmonic is 3610-3760 MHz. If a terminal simultaneously performs LTE downlink reception on band 3 and uplink transmission on NR band 3400-3800 MHz, a second-order harmonic mixing of NR may interfere with a sensitivity of an LTE DL receiver.

In order to avoid self-interference as far as possible, the embodiments of the present application provide the following methods and apparatuses.

FIG. 2 is a schematic flowchart of a wireless communication method 200 according to an embodiment of the present application. In an embodiment, the method 200 is applicable to the system shown in FIG. 1, but is not limited thereto. As shown in FIG. 2, the method 200 includes at least some of the following.

In 210, a terminal device determines that a first signal and a second signal generate self-interference or have a possibility of generating self-interference on the terminal device, where the first signal is a signal transmitted between the terminal device and a first network device using a first carrier, and the second signal is a signal transmitted between the terminal device and a second network device using a second carrier.

In the embodiment of the present application, the first signal and the second signal having the possibility of generating self-interference on the terminal device may be that: the first signal and the second signal generate self-interference on the terminal device when the transmission of the first signal and/or the second signal satisfies a preset condition.

For example, it is assumed that the first signal is an uplink signal and the second signal is a downlink signal. If a transmission power of the first signal exceeds a predetermined value, it is considered that the transmission of the first signal will interfere with the reception of the second signal, that is, the first signal and the second signal will generate self-interference on the terminal device.

For example, it is assumed that the first signal is an uplink signal and the second signal is a downlink signal. If a modulation coding level of the second signal is higher, it is considered that the transmission of the first signal will interfere with the reception of the second signal.

In an embodiment, the first signal is an uplink signal transmitted by the terminal device to the first network device using the first carrier, and the second signal is a downlink signal from the second network device received by the terminal device using the second carrier.

The uplink signal may be an uplink data signal, an uplink control signal, or a sounding reference signal, or the like. The downlink signal may be a downlink data signal, a downlink control signal, or a downlink reference signal, or the like.

In an embodiment, the first signal is a downlink signal from the first network device received by the terminal device using the first carrier, and the second signal is an uplink signal transmitted by the terminal device to the second network device using the second carrier.

The uplink signal may be an uplink data signal, an uplink control signal, or a sounding reference signal, or the like. The downlink signal may be a downlink data signal, a downlink control signal, or a downlink reference signal, or the like.

In the embodiment of the present application, the first signal is a signal transmitted between the terminal device and multiple first network devices using multiple first carriers; and the terminal device transmits first information to at least one first network device of the multiple first network devices.

For example, the first signal includes an uplink signal in a communication with a base station 1 through a carrier F1, and an uplink signal in a communication with a base station 2 through a carrier F2, the second signal is a downlink signal in a communication with a base station 3 through a carrier F3, and a fifth-order intermodulation signal of the signal carried by F1 and the signal carried by F2 interferes with a reception of the downlink signal carried by the carrier F3, then the terminal device may transmit first information to the base station 1 and/or the base station 2, where the information indicates a condition of a signal transmission of the terminal device with the base station 3 using the carrier 3.

The first information is further configured to indicate: a condition of a signal transmission of other network device of the multiple network devices that is not a receiving end of the first information, using the corresponding first carrier.

For example, the first signal includes an uplink signal in a communication with the base station 1 through the carrier F1, the first signal includes an uplink signal in a communication with the base station 2 through the carrier F2, the second signal is a downlink signal in a communication with the base station 3 through the carrier F3, and a fifth-order intermodulation signal of the signal carried by F1 and the signal carried by F2 interferes with a reception of the downlink signal carried by the carrier F3, then the terminal device may transmit first information to the base station 1, where the first information indicates a condition of a signal transmission of the terminal device with the base station 3 using the carrier 3, and a condition of a signal transmission of the terminal device with the base station 2 using the carrier 2.

In an embodiment, the second signal is a signal transmitted between the terminal device and multiple second network devices using multiple second carriers; and the first information is configured to indicate a condition of a signal transmission between the terminal device and the multiple second network devices using the multiple second carriers.

For example, the second signal includes an uplink signal in a communication with a base station 4 through a carrier F4, and an uplink signal in a communication with a base station 5 through a carrier F5, the first signal is a downlink signal in a communication with a base station 6 through a carrier F6, and a fifth-order intermodulation signal of the signal carried by F4 and the signal carried by F5 interferes with a reception of the downlink signal carried by the carrier F6, then the terminal device may transmit first information to the base station 6, where the first information indicates a condition of a signal transmission of the terminal device with the base station 4 using the carrier 4, and a condition of a signal transmission of the terminal device with the base station 5 using the carrier 5.

In an embodiment, the first network device is a network device in an NR system, and the second network device is a network device in an LTE system; or the first network device is a network device in an NR system, and the second network device is a network device in an NR system.

Of course, the first network device may also be a network device in LTE, and the second network device is a network device in an LTE system; or the first network device is a network device in LTE, and the second network device is a network in an NR system.

In the following, how the terminal device judges whether the first signal and the second signal generate self-interference or have the possibility of generating self-interference will be described below in combination with several ways.

The terminal device determines that the first signal and the second signal generate self-interference or have the possibility of generating self-interference on the terminal device according to a preset list, where the preset list is configured to indicate a self-interference condition between multiple frequency bands.

The preset list may be preset according to a protocol, for example, may be preset in the terminal device when leaving the factory.

Since such self-interference is generated internally by the terminal device, and when a terminal device is designed, supported frequency bands are already known. When the terminal is manufactured, it may be already provided inside with frequency bands between which there is mutual interference and a severity degree of the mutual interference.

In an embodiment, the preset list may be preset by the network device on the terminal device through a broadcast message. The preset list may indicate a self-interference condition related to a frequency band of the network device itself.

In an embodiment, the preset list is configured to indicate: a frequency band combination that generates self-interference or has the possibility of generating self-interference.

In an embodiment, the preset list is configured to indicate: the frequency band combination that generates self-interference or has the possibility of generating self-interference, and a frequency range that is interfered with or is possible to be interfered with.

In an embodiment, the preset list is configured to indicate: the frequency band combination that generates self-interference or has the possibility of generating self-interference, the frequency range that is interfered with or is possible to be interfered with, and an interference type.

In an embodiment, the preset list is configured to indicate: the frequency band combination that generates self-interference or has the possibility of generating self-interference, and the interference type.

In an embodiment, the preset list is configured to indicate: the interference type, and the frequency range that is interfered with or is possible to be interfered with.

In an embodiment, the frequency band combination that generates self-interference or has the possibility of generating self-interference may be a combination of multiple uplink frequency bands and a downlink frequency band. In this case, the type of the generated interference may be intermodulation interference, where a type of intermodulation interference can also be subdivided into an order of an intermodulation signal that generates the interference. The frequency range that is interfered with or is possible to be interfered with may be a small piece of frequency band in the downlink signal band.

In an embodiment, the frequency band combination that generates self-interference or has the possibility of generating self-interference may be a combination of an uplink frequency band and a downlink frequency band. In this case, the type of the generated interference may be harmonic interference or harmonic mixing interference. The frequency range that is interfered with or is possible to be interfered with may be a small piece of frequency band in the downlink signal band.

In an embodiment, frequency band information in the frequency band combination that generates self-interference or has the possibility of generating self-interference includes specific frequency start/end position information.

In an embodiment, the frequency range that is interfered with or is possible to be interfered with includes a specific frequency start/stop position.

In an embodiment, an uplink frequency band or a downlink frequency band may be distinguished in the frequency band combination that generates self-interference or has the possibility of generating self-interference. For example, a combination of a certain uplink frequency band and a downlink frequency band may generate self-interference.

In an embodiment, the frequency band combination that generates self-interference or has the possibility of generating self-interference may not be distinguished in terms of uplink and downlink. For example, a combination of a certain frequency band and another frequency band may generate self-interference.

In an embodiment, the frequency band combination that generates self-interference or has the possibility of generating self-interference may be distinguished in terms of uplink but not in terms of downlink. For example, a combination of a certain frequency band and a certain uplink frequency band may generate self-interference.

In an embodiment, the frequency band combination that generates self-interference or has the possibility of generating self-interference may be distinguished in terms of downlink but not in terms of uplink. For example, a combination of a certain downlink frequency band and a certain frequency band may generate self-interference.

In another implementation manner, the terminal device determines that the first signal and the second signal generate self-interference or have the possibility of generating self-interference on the terminal device, through a numerical relationship between a frequency band occupied by the first carrier and a frequency band occupied by the second carrier.

For example, for harmonic interference, when a frequency multiplication of a transmission signal with low frequency falls within a reception bandwidth of high frequency, interference will occur, and the lower the order of the frequency multiplication, the more serious the interference. Therefore, the terminal device may obtain information that interference may be caused, based on such calculation.

For example, for intermodulation interference, when multi-order intermodulation of multiple uplink signals falls within a reception bandwidth, interference will occur. Therefore, the terminal device can obtain information that interference may be caused, based on such calculation.

In an embodiment, the network device may also configure the terminal device to take a frequency band combination as the frequency band combination that will generate self-interference when the interference is severe to a certain extent. Taking the above harmonic interference as an example, it is assumed that the network device may configure that an interference within 5 times harmonics can be considered as self-interference. If there is 6th-order harmonic interference between two frequency bands, the terminal device can consider that there is no self-interference between these two frequency bands.

In an example, the terminal device determines that the first signal and the second signal generate self-interference on the terminal device by means of interference detection.

Since such self-interference is generated internally by the terminal device, and when a terminal device is designed, supported frequency bands are already known. When the terminal is manufactured, frequency bands between which there is mutual interference and a severity degree of the mutual interference may also be measured by the terminal itself.

In 220, the terminal device transmits first information to the first network device, where the first information is configured to indicate that the first signal and the second signal generate self-interference or have the possibility of generating self-interference on the terminal device, and indicate a condition of a signal transmission between the terminal device and the second network device using the second carrier.

In an embodiment, the terminal device may obtain the frequency band combination that can generate self-interference, according to the above method. When the terminal currently operates in at least two frequency bands included in the frequency band combination, if at least one frequency band is a frequency band of NR, the terminal needs to report to a base station (gNB) of NR that the terminal may generate self-interference.

In an embodiment, the first information is specifically configured to indicate at least one of the following: a connectivity manner of a communication connectivity between the terminal device and the second network device using the second carrier; information of a frequency at which the second signal generates interference or has the possibility of generating interference to the first signal, and/or information of a frequency at which the second signal is interfered with or is possible to be interfered with by the first signal; duplex information of a communication between the terminal device and the second network device using the second carrier; and scheduling information of scheduling by the second network device for the terminal device on the second carrier.

In an embodiment, the frequency at which the second signal generates interference or has the possibility of generating interference to the first signal may be distinguished in terms of uplink or downlink, or there is no distinction between uplink or downlink.

In an embodiment, the frequency at which the second signal is interfered with or is possible to be interfered with by the first signal may be distinguished in terms of uplink or downlink, or there is no distinction between uplink or downlink.

In an embodiment, the connectivity manner is a dual connectivity manner or an independent connectivity manner.

The independent connectivity manner may mean that the connectivity between the terminal device and each of the network devices is independent from each other, and there is no information interaction between the network devices with respect to communications with the terminal device.

The dual connectivity manner may mean that the connectivity between the terminal device and each of the network devices is not independent, and there may be information interaction between the network devices with respect to communications with the terminal device. In an embodiment, the dual connectivity may also be referred to as multiple connectivity.

In an embodiment, the duplex information includes a duplex mode and/or configuration information of the duplex mode.

The duplex mode may be Time Division Duplexing (TDD) or Frequency Division Duplexing (FDD).

In an embodiment, when the duplex mode is TDD, the duplex information may include configuration information of the TDD.

In an embodiment, the scheduling information includes uplink scheduling information and/or downlink scheduling information.

In an embodiment, the uplink scheduling information includes at least one of the following:
a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In an embodiment, by reporting a time-frequency resource occupied by the uplink transmission between the terminal device and the second network device using the second carrier to the first network device, it may make a downlink transmission scheduled by the first network device not fall into a frequency range of an interference caused by the uplink transmission.

In an embodiment, because when the transmission power of the uplink transmission is small, a possibility of causing interference to a downlink reception is low, or the interference is small, thus, by reporting the transmission power of the uplink transmission between the terminal device and the second network device using the second carrier to the first network device, the first network device can be enabled to judge whether the downlink transmission scheduled by the first network device is interfered with by the uplink transmission scheduled by the first network device.

In an embodiment, the downlink scheduling information includes at least one of the following:
a time-frequency resource where a downlink control channel is located, a time-frequency resource where a downlink data channel is located, a period of a downlink semi-persistent transmission, a time-frequency resource of a downlink semi-persistent transmission configuration and a Modulation and Coding Scheme (MCS) adopted for downlink transmission.

In an embodiment, by reporting a time-frequency resource occupied by the downlink transmission between the terminal device and the second network device using the second carrier to the first network device, it may avoid the uplink transmission scheduled by the first network device from interfere with the downlink transmission.

In an embodiment, because when a level of the MCS of the downlink transmission is low, a tolerability for the interference caused by the uplink transmission is larger, thus, by reporting the MCS adopted by the downlink transmission between the terminal device and the second network device using the second carrier to the first network device, the first network device may be enabled to judge whether the uplink transmission scheduled by the first network device interferes with the downlink transmission scheduled by the first network device.

In an embodiment, when the second signal is an uplink signal, uplink scheduling information of the second signal may be transmitted to the first network device; and the uplink scheduling information of the second signal may also be transmitted to the first network device, and scheduling information of the downlink signal transmitted between the terminal device and the second network device using the second carrier may also be reported to the first network device.

In an embodiment, when the second signal is an downlink signal, downlink scheduling information of the second signal may be transmitted to the first network device; and the downlink scheduling information of the second signal may also be transmitted to the first network device, and scheduling information of the uplink signal transmitted between the terminal device and the second network device using the second carrier may also be reported to the first network device.

Therefore, in the embodiment of the present application, when a terminal device determines that a first signal (a signal transmitted between the terminal device and a first network device using a first carrier) and a second signal (a signal transmitted between the terminal device and a second network device using second first carrier) generate self-interference or have a possibility of generating self-interference on the terminal device, the terminal device transmits first information to the first network device, where the first information is configured to indicate that the first signal and the second signal generate self-interference or have the possibility of generating self-interference on the terminal device, and indicate a condition of a signal transmission between the terminal device and the second network device using the second carrier, which can avoid a signal transmission scheduled by the second network device for the terminal device from interfering with a signal transmission scheduled by the first network device for the terminal device, or avoid the signal transmission scheduled by the second network device for the terminal device from being interfered with by the signal transmission scheduled by the first network device for the terminal device.

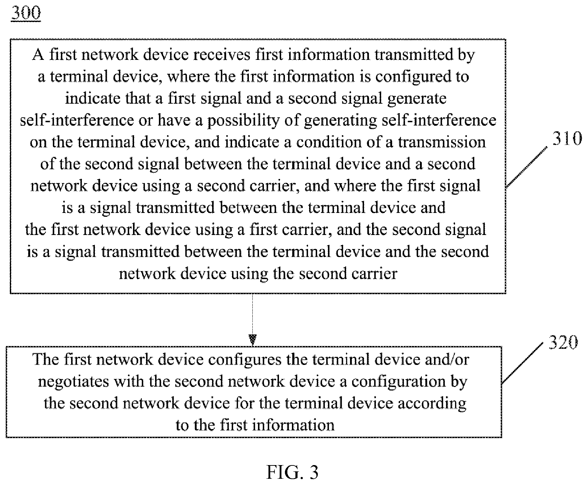

FIG. 3 is a schematic flowchart of a wireless communication method 300 according to an embodiment of the present application. The method 300 can include at least a portion of the following contents.

In 310, a first network device receives first information transmitted by a terminal device, where the first information is configured to indicate that a first signal and a second signal generate self-interference or have a possibility of generating self-interference on the terminal device, and indicate a condition of a transmission of the second signal between the terminal device and a second network device using a second carrier, and where the first signal is a signal transmitted between the terminal device and the first network device using a first carrier, and the second signal is a signal transmitted between the terminal device and the second network device using the second carrier.

In 320, the first network device, according to the first information, configures the terminal device and/or negotiates with the second network device a configuration by the second network device for the terminal device.

In an embodiment, the first information is specifically configured to indicate at least one of the following:
a connectivity manner of a communication connectivity between the terminal device and the second network device using the second carrier;
information of a frequency at which the second signal generates interference or has the possibility of generating interference to the first signal, and/or information of a frequency at which the second signal is interfered with or is possible to be interfered with by the first signal;
duplex information of a communication between the terminal device and the second network device using the second carrier; and
scheduling information of scheduling by the second network device for the terminal device on the second carrier.

In an embodiment, the connectivity manner is a dual connectivity manner or an independent connectivity manner.

In an embodiment, the duplex information includes a duplex mode and/or configuration information of the duplex mode.

In an embodiment, the scheduling information includes uplink scheduling information and/or downlink scheduling information.

In an embodiment, the uplink scheduling information includes at least one of the following: a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In an embodiment, the downlink scheduling information includes at least one of the following: a time-frequency resource where a downlink control channel is located, a time-frequency resource where a downlink data channel is located, a period of a downlink semi-persistent transmission, a time-frequency resource of a downlink semi-persistent transmission configuration and an MCS adopted for downlink transmission.

For ease of understanding, how the first network device configures the terminal device and/or negotiates with the second network device a configuration by the second network device for the terminal device according to the first information will be described below in combination with several implementation manners.

In an implementation manner, the network device may determine different scheduling schemes according to different interference types to avoid interference.

For example, if an uplink signal in an LTE system generates interference to a downlink signal in an NR system, a base station in the NR system will perform a downlink scheduling on the terminal device in a downlink time-frequency region free from interference according to an uplink scheduling information of the LTE reported by the terminal device.

For example, if an uplink in an NR system generates interference to a downlink signal in an LTE system, a base station in the NR system will schedule the uplink signal of the NR system to not interfere with at least a control channel of the LTE, according to a downlink scheduling information of the LTE reported by the terminal device. The NR base station may also reduce interference to an LTE PDSCH by controlling an uplink transmission power of the NR.

In an implementation manner, a duplex mode between the second network device and the terminal device is TDD having a first configuration; and a duplex mode of a transmission between the first network device and the terminal device using the first carrier is configured as the TDD with the first configuration.

For example, when an LTE connectivity and an NR connectivity generate mutual interference, and the LTE connectivity is a TDD connectivity, then an NR base station can configure the NR connectivity for the terminal device to be TDD configuration, which is the same as the LTE connectivity generating the interference, according to the reporting of the terminal device. In this way, from the perspective of the terminal device, the LTE connectivity and NR connectivity are in a synchronous transmission and reception state, thereby avoiding the self-interference problem.

In an embodiment, the duplex mode between the second network device and the terminal device is FDD; and the first network device negotiates with the second network device to configure a connectivity between the second network device and the terminal device using the second carrier as a half-duplex mode, and negotiates that a transmission state between the first network device and the second network with the terminal device using the first carrier and the second carrier respectively are a synchronous transmission and reception state.

For example, when a terminal device has LTE and NR dual connectivity, and when the LTE connectivity and the NR connectivity generate mutual interference, and a duplex mode of the LTE connectivity is FDD, an NR base station may coordinate an LTE base station, configure the FDD LTE connectivity of the terminal to be a half-duplex mode (transmission and reception time are not simultaneous), and configure the NR connectivity to be in a synchronous transmission and reception state with the LTE connectivity, thereby avoiding self-interference.

According to the above method, based on a reporting of the terminal device to the network device, the network device may solve the self-interference problem through reasonable scheduling. However, in practice, it may be difficult for network devices to completely avoid self-interference in scheduling. For example, in an NR system, a scheduling period may be much smaller than a scheduling period of LTE. At this time, even if the terminal device reports self-interference information, self-interference may be unavoidable (the network device of the NR system may have already performed a scheduling before receiving a self-interference report of the terminal device related to LTE scheduling information), then a certain mechanism is needed to enable the terminal device to avoid the above self-interference after the network devices of the NR/NR or NR/LTE have made scheduling that cause mutual interference (self-interference).

It should be understood that, in the method in the following embodiments, the terminal device may report, or may not report the self-interference related information as shown in the above manner. That is, the following methods and the above methods may be used in combination or may exist independently.

The following description relates to unclaimed embodiments.

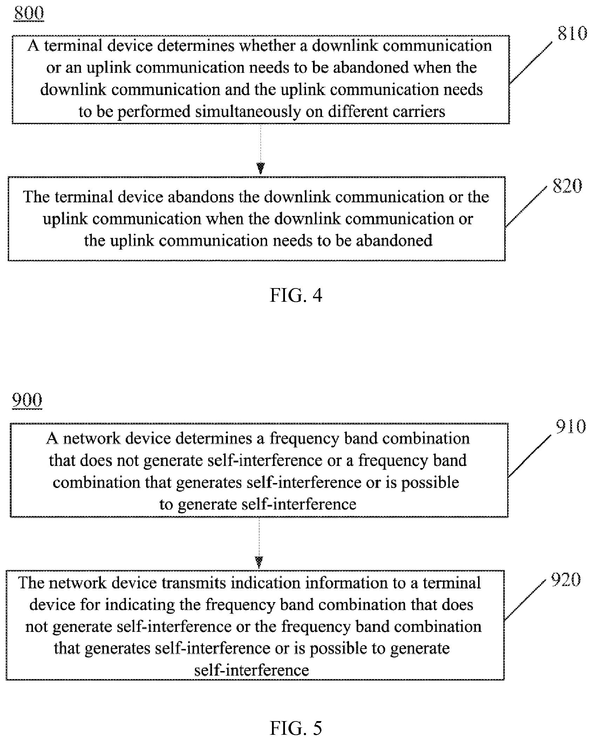

FIG. 4 is a schematic flowchart of a wireless communication method 800 according to an embodiment of the present application. The method 800 includes at least a portion of the following contents.

In 810, a terminal device determines whether a downlink communication or an uplink communication needs to be abandoned when the downlink communication and the uplink communication need to be performed simultaneously on different carriers.

In an implementation manner, the terminal device determines whether the downlink communication and the uplink communication generate self-interference; and the terminal device determines whether the downlink communication or the uplink communication needs to be abandoned according to whether the downlink communication and the uplink communication generate self-interference.

In an embodiment, the terminal device determines whether the downlink communication and the uplink communication generate self-interference according to a combination of a frequency band of the downlink communication and a frequency band of the uplink communication or a current time.

Specifically, the terminal device determines whether the downlink communication and the uplink communication generate self-interference according to the current time in combination with a time period configured by the network device in which no self-interference is generated.

In an embodiment, the terminal device determines whether the downlink communication and the uplink communication generate self-interference according to the combination of the frequency band of the downlink communication and the frequency band of the uplink communication in combination with a frequency band combination that does not generate self-interference or a frequency band combination that is possible to generate self-interference configured by the network device.

Specifically, the network device may indicate to the terminal device whether uplink and downlink resources scheduled by the terminal device have potential self-interference problem. The advantage of this indication is that if the network device does not use a frequency resource that may cause interference when scheduling the terminal device, the terminal device does not have to judge whether the scheduling will cause self-interference after receiving the scheduling every time. Further, the network device may further indicate a frequency band range that may be scheduled for the terminal device, including uplink and downlink frequency bands, and if there is no potential self-interference in the uplink and downlink frequency bands, the terminal may also know that there is no potential self-interference in subsequent scheduling. Further, the network may also indicate a frequency band range that may be scheduled for the terminal, including uplink and downlink frequency bands, and if there is potential self-interference in the uplink and downlink frequency bands, the terminal may also know that there is potential self-interference in subsequent scheduling.

In an embodiment, the network device, when determining a frequency band combination that does not generate self-interference, may determine a duration of scheduling the terminal device on the combination, and the network device may schedule the terminal device by using the combination that does not generate self-interference, and the terminal device does not perform self-interference judgment for the scheduling of the network device during the duration.

In an embodiment, the above indication may be a broadcast signaling, for a group of terminals or all terminals in a cell, or may be a UE-specific signaling, for a specific terminal.

In 820, the terminal device abandons the downlink communication or the uplink communication when the downlink communication or the uplink communication needs to be abandoned.

In an embodiment, a communication that needs to be abandoned in the downlink communication and the uplink communication is determined according to priority information of communication; and the terminal device abandons the determined communication that needs to be abandoned.

The priority information indicates that:
a priority of a communication in an LTE system is higher than a priority in a new radio system; and/or
a priority of an uplink communication is higher than a priority of a downlink communication; and/or
a priority of a communication transmitting control information is higher than a priority of a communication transmitting data; and/or
a priority of a communication with a long time interval between two communications is higher than a priority of a communication with a short time interval between two communications.

In one implementation manner, the priority information is configured to indicate that:
a priority of a communication in an LTE system is higher than a priority of an uplink communication in an NR system; and
the uplink communication in the NR system has a higher priority than a downlink communication in the NR system.

In one implementation manner, the priority information is configured for that:
a priority of a transmission of a physical uplink control channel (PUCCH) is higher than a priority of a downlink paging or system information transmission in an NR system; the priority of the downlink paging or system information transmission in the NR system is higher than a priority of a transmission of a physical uplink shared channel (PUSCH) in the NR system; and the transmission of the PUSCH in the NR system has a higher priority than a transmission of a physical downlink shared channel (PDSCH) in the NR system.

Specifically, the base station may configure a priority list for the terminal device in advance, and the list may be configured by means of broadcast (to configure a group of terminals or terminals in a cell), or by means of a UE-specific signaling to configure a single terminal. The above priority list specifies that when the terminal device receives scheduling that may cause self-interference (an uplink scheduling of a carrier frequency/carrier forms interference to a downlink scheduling of another carrier frequency/carrier), the terminal device may select, according to a priority, the scheduling to be performed and the scheduling to be abandoned.

For example, priorities in the priority list, from high to low, may be that: LTE scheduling (transmission) > NR uplink scheduling (transmission) > NR downlink scheduling (transmission). The priority mentioned in the embodiment of the present application being higher refers to a communication that is more important and will not be abandoned easily.

The meaning of the above list may be as follows. When the terminal device receives LTE and NR scheduling that may cause self-interference, the terminal device preferentially reserves the LTE scheduling and abandons the NR scheduling; and when the terminal device receives NR scheduling that may cause self-interference, the terminal device preferentially reserves NR uplink scheduling and abandons NR downlink scheduling. The above principles have the following advantages: 1. due to a backward compatibility problem, an existing design of an LTE base station/chip is difficult to solve the self-interference problem, and it is reasonable to give LTE scheduling a higher priority. 2. In general, uplink scheduling consumes more terminal energy, and the terminal device needs to make more preparations for the uplink scheduling (preparing to transmit data). Therefore, when the NR uplink scheduling and NR downlink scheduling conflict, the uplink scheduling is preferentially reserved.

For another example, priorities in the priority list, from high to low, may be that: NR control information uplink scheduling (transmission) (PUCCH) > NR downlink paging, System Information Block (SIB) > NR uplink data scheduling (PUSCH) (transmission) > NR downlink data scheduling (PDSCH) (transmission).

The meaning of the above list is as follows. When the terminal has NR uplink and downlink scheduling (transmission) that may cause self-interference, the terminal device selects preferentially reserved scheduling/transmission according to the above order. Since the PUCCH generally transmits relatively important information, its priority is the highest; the downlink paging/SIB has a certain period, and the terminal device needs to wait for a certain time once missing, so it also needs a higher priority; the priority of the PUSCH being higher than the PDSCH is because the terminal needs to make more preparations for uplink scheduling/transmission.

In an embodiment, the terminal device determines whether the downlink communication or the uplink communication needs to be abandoned according to a communication that needs to be abandoned indicated by the network device.

Specifically, in addition to by means of the priority list to allow the terminal device to select a reserved scheduling/transmission, the base station may directly instruct the terminal to abandon which scheduling (transmission) to avoid self-interference. For example, when a terminal has LTE+NR dual connectivity, an LTE base station schedules an uplink semi-persistent scheduling (SPS) transmission, and an NR base station wants to perform downlink scheduling that causes a collision (occurrence of self-interference) with one certain transmission of uplink SPS transmissions in the LTE. Then, the NR base station may notify the terminal of abandoning the transmission in the LTE connectivity that generates self-interference, while performing the downlink scheduling. In addition to notifying the terminal of abandoning a scheduling/transmission to avoid self-interference, the base station may also modify a previously performed scheduling that would generate self-interference. Taking the above as an example again, the NR base station may instruct the terminal to use a new uplink resource (which would not generate self-interference) to transmit an uplink transmission, while performing the downlink scheduling, so as to avoid self-interference.

In an embodiment, when the downlink communication or uplink communication is abandoned, the terminal device transmits a notification signaling to the network device for indicating that the downlink communication or the uplink communication is abandoned.

In an embodiment, the notification signaling is a negative-acknowledgement (NACK) signaling when the downlink communication is abandoned.

In an embodiment, the notification signaling is further configured to indicate scheduling information of a communication that is not abandoned or the first information as shown in the above method.

Specifically, when the terminal device abandons a certain scheduling (transmission) according to the above priority list, the terminal device may report to the base station side. For example, after the terminal device abandons a certain downlink scheduling, the terminal device may send a NACK signaling to the base station; after the terminal abandons a certain uplink transmission, the terminal may send a signaling to the base station to notify the base station, for example, a predefined PUCCH format.

In an embodiment, when notifying the base station of abandoning a certain scheduling (transmission), the terminal device may also notify the base station of scheduling information that generates interference. For example, if the terminal abandons a certain downlink scheduling, the terminal notifies the base station of uplink scheduling information that generates interference.

In an embodiment, the downlink communication or the uplink communication that is abandoned is re-performed after the downlink communication or the uplink communication is abandoned.

Specifically, the terminal device re-performs the downlink communication or the uplink communication according to scheduling of the network device.

Therefore, in the embodiment of the present application, a terminal device determines whether a downlink communication or an uplink communication needs to be abandoned when the downlink communication and the uplink communication need to be performed simultaneously on different carriers; and the terminal device abandons the downlink communication or the uplink communication when the downlink communication or the uplink communication needs to be abandoned, which can avoid generation of self-interference.

FIG. 5 is a schematic flowchart of a wireless communication method 900 according to an embodiment of the present application. The method 900 includes at least a portion of the following contents.

In 910, a network device determines a frequency band combination that does not generate self-interference or a frequency band combination that generates self-interference or is possible to generate self-interference.

In 920, the network device transmits indication information to a terminal device for indicating the frequency band combination that does not generate self-interference or the frequency band combination that generates self-interference or is possible to generate self-interference.

In an embodiment, the indication information is further configured to indicate a duration of the frequency band combination that does not generate self-interference or a frequency band combination that generates self-interference or is possible to generate self-interference.

In an embodiment, the network device schedules the terminal device by using the frequency band combination that does not generate self-interference.

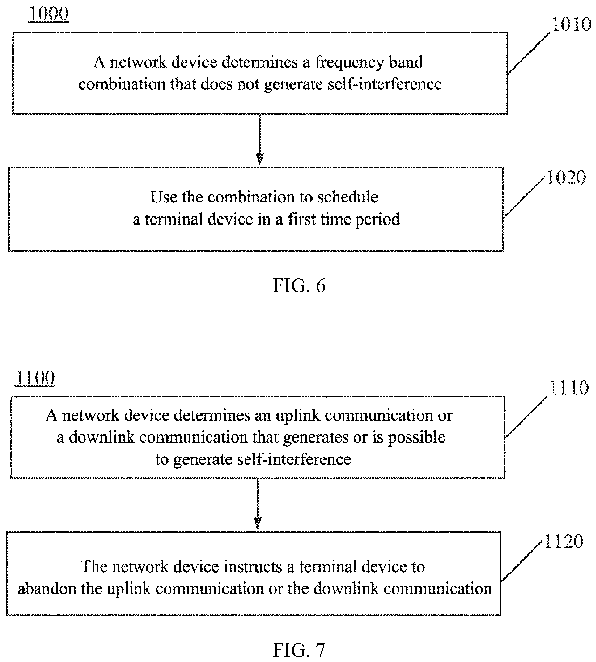

FIG. 6 is a schematic flowchart of a wireless communication method 1000 according to an embodiment of the present application. The method 1000 includes at least a portion of the following contents.

In 1010, a network device determines a frequency band combination that does not generate self-interference.

In 1020, a terminal device is scheduled using the combination in a first time period.

In an embodiment, the network device may transmit indication information to the terminal device, where the indication information is configured to indicate that an uplink communication or a downlink communication does not need to be abandoned in the first time period.

FIG. 7 is a schematic flowchart of a wireless communication method 1100 according to an embodiment of the present application. The method 1100 includes at least a portion of the following contents.

In 1110, a network device determines an uplink communication or a downlink communication that generates or is possible to generate self-interference.

In 1120, the network device instructs a terminal device to abandon the uplink communication or the downlink communication.

In an embodiment, the uplink communication and the downlink communication are scheduled by different network devices; and a first network device instructs the terminal device to abandon a communication scheduled by a second network device.

It should be understood that the methods in the embodiments of the present application can be used in combination with each other when there is no contradiction.

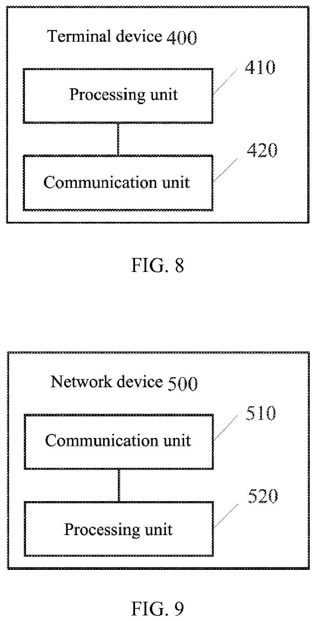

FIG. 8 is a schematic block diagram of a terminal device 400 according to an embodiment of the present application. As shown in FIG. 8, the terminal device 400 includes a processing unit 410 and a communication unit 420.

In an embodiment, the processing unit 410 is configured to: determine that a first signal and a second signal generate self-interference or have a possibility of generating self-interference on the terminal device, where the first signal is a signal transmitted between the terminal device and a first network device using a first carrier, and the second signal is a signal transmitted between the terminal device and a second network device using a second carrier; and the communication unit 420 is configured to: transmit first information to the first network device, where the first information is configured to indicate that the first signal and the second signal generate self-interference or have the possibility of generating self-interference on the terminal device, and indicate a condition of a signal transmission between the terminal device and the second network device using the second carrier.

In an embodiment, the first signal is an uplink signal transmitted by the terminal device to the first network device using the first carrier, and the second signal is a downlink signal from the second network device received by the terminal device using the second carrier; or
the first signal is a downlink signal from the first network device received by the terminal device using the first carrier, and the second signal is an uplink signal transmitted by the terminal device to the second network device using the second carrier.

In an embodiment, the first network device is a network device in a new wireless NR system, and the second network device is a network device in a long term evolution LTE system; or
the first network device is a network device in the NR system, and the second network device is a network device in the NR system.

The processing unit 410 is further configured to:
determine, according to a preset list, that the first signal and the second signal generate self-interference or have the possibility of generating self-interference on the terminal device, where the preset list is configured to indicate a self-interference condition between multiple frequency bands.

In an embodiment, the preset list is specifically configured to indicate:
a frequency band combination that generates self-interference or has the possibility of generating self-interference; or
the frequency band combination that generates self-interference or has the possibility of generating self-interference, and a frequency range that is interfered with or is possible to be interfered with; or
the frequency band combination that generates self-interference or has the possibility of generating self-interference, the frequency range that is interfered with or is possible to be interfered with, and an interference type; or
the frequency band combination that generates self-interference or has the possibility of generating self-interference, and the interference type; or
the interference type, and the frequency range that is interfered with or is possible to be interfered with.

In an embodiment, the processing unit 410 is further configured to:
determine that the first signal and the second signal generate self-interference or have the possibility of generating self-interference on the terminal device, through a numerical relationship between a frequency band occupied by the first carrier and a frequency band occupied by the second carrier.

In an example, the processing unit 410 is further configured to:
determine that the first signal and the second signal generate self-interference on the terminal device, by means of interference detection.

In an embodiment, the first information is specifically configured to indicate at least one of the following:
a connectivity manner of a communication connectivity between the terminal device and the second network device using the second carrier;
information of a frequency at which the second signal generates interference or has the possibility of generating interference to the first signal, and/or information of a frequency at which the second signal is interfered with or is possible to be interfered with by the first signal;
duplex information of a communication between the terminal device and the second network device using the second carrier; and
scheduling information of scheduling by the second network device for the terminal device on the second carrier.

In an embodiment, the connectivity manner is a dual connectivity manner or an independent connectivity manner.

In an embodiment, the duplex information includes a duplex mode and/or configuration information of the duplex mode.

In an embodiment, the scheduling information includes uplink scheduling information and/or downlink scheduling information.

In an embodiment, the uplink scheduling information includes at least one of the following:
a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In an embodiment, the downlink scheduling information includes at least one of the following:
a time-frequency resource where a downlink control channel is located, a time-frequency resource where a downlink data channel is located, a period of a downlink semi-persistent transmission, a time-frequency resource of a downlink semi-persistent transmission configuration and an MCS adopted for downlink transmission.

In an embodiment, the first signal is a signal transmitted between the terminal device and multiple first network devices using multiple first carriers; and
the communication unit 420 is further configured to:
transmit the first information to at least one first network device of the multiple first network devices.

In an embodiment, the second signal is a signal transmitted between the terminal device and multiple second network devices using multiple second carriers; and
the first information is configured to indicate a condition of signal transmissions between the terminal device and the multiple second network devices using the multiple second carriers.

In an embodiment, the processing unit 410 is configured to determine whether a downlink communication or an uplink communication needs to be abandoned when the downlink communication and the uplink communication need to be performed simultaneously on different carriers; and the communication unit 420 is configured to: abandon the downlink communication or the uplink communication when the downlink communication or the uplink communication needs to be abandoned.

It should be understood that the terminal device 400 can implement the operations implemented by the terminal device in the above method embodiments, which will not be repeated herein for brevity.

FIG. 9 is a schematic block diagram of a network device 500 according to an embodiment of the present application. As shown in FIG. 9, the network device 500 includes a communication unit 510 and a processing unit 520.

In an embodiment, the communication unit is configured to: receive first information transmitted by a terminal device, where the first information is configured to indicate that a first signal and a second signal generate self-interference or have a possibility of generating self-interference on the terminal device, and indicate a condition of a transmission of the second signal between the terminal device and a second network device using a second carrier, and where the first signal is a signal transmitted between the terminal device and the first network device using a first carrier, and the second signal is a signal transmitted between the terminal device and the second network device using the second carrier; and
the processing unit is configured to: configure the terminal device and/or negotiates with the second network device a configuration by the second network device for the terminal device according to the first information.

In an embodiment, the first information is specifically configured to indicate at least one of the following:
a connectivity manner of a communication connectivity between the terminal device and the second network device using the second carrier;
information of a frequency at which the second signal generates interference or has the possibility of generating interference to the first signal, and/or information of a frequency at which the second signal is interfered with or is possible to be interfered with by the first signal;
duplex information of a communication between the terminal device and the second network device using the second carrier; and
scheduling information of scheduling by the second network device for the terminal device on the second carrier.

In an embodiment, the connectivity manner is a dual connectivity manner or an independent connectivity manner.

In an embodiment, the duplex information includes a duplex mode and/or configuration information of the duplex mode.

In an embodiment, the scheduling information includes uplink scheduling information and/or downlink scheduling information.

In an embodiment, the uplink scheduling information includes at least one of the following:
a time-frequency resource where an uplink control channel is located, a time-frequency resource where an uplink data channel is located, a period of an uplink semi-persistent transmission, a time-frequency resource of an uplink semi-persistent transmission configuration and a transmission power of an uplink transmission.

In an embodiment, the downlink scheduling information includes at least one of the following:
a time-frequency resource where a downlink control channel is located, a time-frequency resource where a downlink data channel is located, a period of a downlink semi-persistent transmission, a time-frequency resource of a downlink semi-persistent transmission configuration and an MCS adopted for downlink transmission.

In an embodiment, the first information indicates that a duplex mode between the second network device and the terminal device is TDD having a first configuration; and
the processing unit 520 is further configured to:
configure a duplex mode of a transmission between the first network device and the terminal device using the first carrier as the TDD with the first configuration.

In an embodiment, the first information indicates that a duplex mode between the second network device and the terminal device is FDD; and
the processing unit 520 is further configured to:
negotiate with the second network device to configure a connectivity between the second network device and the terminal device using the second carrier as a half-duplex mode, and negotiate that a transmission state between the first network device and the second network with the terminal device using the first carrier and the second carrier respectively is a synchronous transmission and reception state.

In an embodiment, the processing unit 520 is configured to: determine a frequency band combination that does not generate self-interference or a frequency band combination that generates self-interference or is possible to generate self-interference; and the communication unit 510 is configured to: transmit indication information to a terminal device for indicating the frequency band combination that does not generate self-interference or the frequency band combination that generates self-interference or is possible to generate self-interference.

In an embodiment, the processing unit 520 is configured to: determine a frequency band combination that does not generate self-interference; and the communication unit 510 is further configured to: use the combination to schedule the terminal device in a first time period.

In an embodiment, the processing unit 520 is configured to: determine an uplink communication or a downlink communication that generates or is possible to generate self-interference; and the communication unit 510 is further configured to: instruct a terminal device to abandon the uplink communication or the downlink communication. It should be understood that the network device 500 can implement the operations implemented by the network device in the above method embodiments, which will not be repeated herein for brevity.

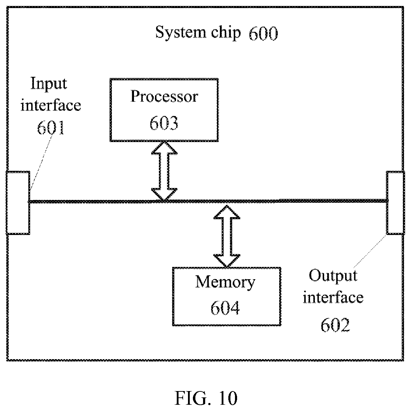

FIG. 10 is a schematic structural diagram of a system chip 600 according to an embodiment of the present application. The system chip 600 of FIG. 10 includes an input interface 601, an output interface 602, a processor 603 and a memory 604 that may be connected through an internal communication connectivity line, and the processor 603 is configured to execute code in the memory 604.

In an embodiment, when the code is executed, the processor 603 implements the method performed by the network device in the method embodiments, which will not be repeated herein for brevity.

In an embodiment, when the code is executed, the processor 603 implements the method performed by the terminal device in the method embodiments, which will not be repeated herein for brevity.

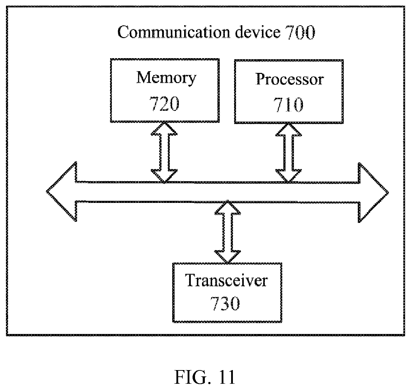

FIG. 11 is a schematic block diagram of a communication device 700 according to an embodiment of the present application. As shown in FIG. 11, the communication device 700 includes a processor 710 and a memory 720, where the memory 720 may store program code therein, and the processor 710 may execute the program code stored in the memory 720.

In an embodiment, as shown in FIG. 11, the communication device 700 may include a transceiver 730, and the processor 710 may control the transceiver 730 to communicate externally.

In an embodiment, the processor 710 can call the program code stored in the memory 720 to perform the corresponding operations of the network device in the method embodiments, which will not be repeated herein for brevity.

In an embodiment, the processor 710 may call the program code stored in the memory 720 to perform corresponding operations of the terminal device in the method embodiments, which will not be repeated herein for brevity.

It should be understood that the processor of the foregoing claimed or unclaimed embodiments of the present application may be an integrated circuit chip with a signal processing capability. In the implementation process, each step of the above method embodiments may be completed by an integrated logic circuit of hardware or by an instruction in software form in a processor. The above processor may be a general processor, a digital signal processor (DSP), an application specific integrated circuit (ASIC), a field programmable gate array (FPGA) or other programmable logic devices, discrete gates or transistor logic devices, discrete hardware components, etc. Each method, step and logic block diagram disclosed in the embodiments of the present application can be implemented or performed. The general processor may be a microprocessor, or the processor may also be any conventional processor or the like. Steps of the method disclosed in combination of the embodiments of the present application may be directly embodied as being performed by a hardware decoding processor, or may be performed by a combination of hardware and software modules in the decoding processor. The software module can be located in a mature storage medium in the art, such as a random access memory, a flash memory, a read-only memory, a programmable read-only memory or an electrically erasable programmable memory, a registers. The storage medium is located in the memory, and the processor reads information in the memory and completes steps of the above methods by combining its hardware.

It should be understood that the memory in the embodiments of the present application may be a volatile memory or a non-volatile memory, or may include both the volatile memory and the non-volatile memory. The non-volatile memory may be a read-only memory (ROM), a programmable ROM (PROM), an erasable PROM (EPROM), or an electrically EPROM (EEPROM) or a flash memory. The volatile memory may be a random access memory (RAM) that acts as an external cache. By way of example rather than limiting illustration, RAM of many forms are available, such as a static RAM (SRAM), a dynamic RAM (DRAM), a synchronous DRAM (SDRAM), a double data rate SDRAM (DDR SDRAM), an enhanced SDRAM (ESDRAM), a Synchlink DRAM, (SLDRAM) ) and a direct Rambus RAM (DR RAM). It should be noted that memories of the systems and methods described herein are intended to include, but not limited to, these and any other suitable types of memory.

Those skilled in the art will appreciate that units and algorithm steps of each example described in combination with the embodiments disclosed herein can be implemented in electronic hardware or a combination of computer software and electronic hardware. Whether these functions are executed in hardware or software depends on the specific application and design constraints of the technical solution. For each specific application, those skilled in the art can use different methods to implement the described functions, but such implementation should not be considered to be beyond the scope of the present application.

Those skilled in the art can clearly understand that for convenience and brevity of the description, the specific working process of the system, the apparatus and the units described above may refer to corresponding processes in the above method embodiments, and will not be repeated herein.

In the several embodiments provided by the present application, it should be understood that the disclosed systems, apparatuses, and methods may be implemented in other ways. For example, the apparatus embodiments described above are merely illustrative. For example, the division of the unit is only a logical function division, and there may be other division ways in actual implementation, for example, multiple units or components may be combined or be integrated into another system, or some features may be ignored or not executed. In addition, coupling or direct coupling or communication connectivity shown or discussed herein may be an indirect coupling or communication connectivity through some interfaces, apparatuses or units, and may be electrical, mechanical or otherwise.

The units described as separate components may be or may not be physically separated, and the components displayed as units may be or may not be physical units, that is, they may be located in one place, or may be distributed onto multiple network units. Some or all of the units may be selected according to actual needs for the purpose of implementing the solution of the present embodiment.

In addition, the functional units in each embodiment of the present application may be integrated into one processing unit, or each unit may physically exist, or two or more units may be integrated into one unit.

The functions may be stored in a computer readable storage medium, if implemented in the form of a software functional unit, and sold or used as a standalone product. Based on such understanding, the technical solution of the present application, in essence, or the part contributing to the existing technology or the part of the technical solution can be embodied in the form of a software product, which is stored in a storage medium and includes a number of instructions for enabling a computer device (which may be a personal computer, a server, or a network device, etc.) to perform all or part of the steps described in methods in each embodiment of the present application. The above storage medium includes various media that can store program code, such as a U disk, a mobile hard disk, a read-only memory (ROM), a random access memory (RAM), a magnetic disk, or an optical disk.

The foregoing description comprises different examples, which are provided for a better understanding of the invention. The scope of protection of the present application is exclusively defined by the attached claims.

## Claims

1. A wireless communication method, **characterized by** comprising:
determining (210), by a terminal device, that a first signal and a second signal have a possibility of generating self-interference on the terminal device according to a preset list through a numerical relationship between a frequency band occupied by a first carrier and a frequency band occupied by a second carrier, wherein the preset list is configured to indicate a self-interference condition between the frequency band occupied by the first carrier and the frequency band occupied by the second carrier, the first signal is a signal to be transmitted between the terminal device and a first network device using the first carrier, the second signal is a signal to be transmitted between the terminal device and a second network device using the second carrier, and transmission of the first signal and transmission of the second signal take place at least partially overlapping in time; and
transmitting (220), by the terminal device, first information to the first network device to enable the first network device to, according to the first information, configure the terminal device and/or negotiate with the second network device a configuration by the second network device for the terminal device, wherein the first information is configured to indicate that the first signal and the second signal have the possibility of generating self-interference on the terminal device, and indicate at least one of a connectivity manner of a communication connectivity between the terminal device and the second network device using the second carrier, duplex information of a communication between the terminal device and the second network device using the second carrier and scheduling information of scheduling by the second network device for the terminal device on the second carrier.

2. The method according to claim 1, wherein the first signal is an uplink signal transmitted by the terminal device to the first network device using the first carrier, and the second signal is a downlink signal from the second network device received by the terminal device using the second carrier; or
the first signal is a downlink signal from the first network device received by the terminal device using the first carrier, and the second signal is an uplink signal transmitted by the terminal device to the second network device using the second carrier.

3. The method according to claim 1 or 2, wherein the preset list is configured to indicate:
a frequency band combination that generates self-interference or has the possibility of generating self-interference; or
the frequency band combination that generates self-interference or has the possibility of generating self-interference, a frequency range that is interfered with or is possible to be interfered with; or
the frequency band combination that generates self-interference or has the possibility of generating self-interference, the frequency range that is interfered with or is possible to be interfered with, and an interference type; or
the frequency band combination that generates self-interference or has the possibility of generating self-interference, and the interference type; or
the interference type, and the frequency range that is interfered with or is possible to be interfered with.

4. A terminal device, **characterized by** comprising: a processing unit (410) and a communication unit (420); wherein,
the processing unit (410) is configured to: determine that a first signal and a second signal have a possibility of generating self-interference on the terminal device according to a preset list through a numerical relationship between a frequency band occupied by a first carrier and a frequency band occupied by a second carrier, wherein the preset list is configured to indicate a self-interference condition between the frequency band occupied by the first carrier and the frequency band occupied by the second carrier, the first signal is a signal to be transmitted between the terminal device and a first network device using the first carrier, the second signal is a signal to be transmitted between the terminal device and a second network device using the second carrier, and transmission of the first signal and transmission of the second signal take place at least partially overlapping in time; and
the communication unit (420) is configured to: transmit first information to the first network device to enable the first network device to, according to the first information, configure the terminal device and/or negotiate with the second network device a configuration by the second network device for the terminal device, wherein the first information is configured to indicate that the first signal and the second signal have the possibility of generating self-interference on the terminal device, and indicate at least one of a connectivity manner of a communication connectivity between the terminal device and the second network device using the second carrier, duplex information of a communication between the terminal device and the second network device using the second carrier and scheduling information of scheduling by the second network device for the terminal device on the second carrier.

5. The terminal device according to claim 4, wherein the first signal is an uplink signal transmitted by the terminal device to the first network device using the first carrier, and the second signal is a downlink signal from the second network device received by the terminal device using the second carrier; or
the first signal is a downlink signal from the first network device received by the terminal device using the first carrier, and the second signal is an uplink signal transmitted by the terminal device to the second network device using the second carrier.

6. The terminal device according to claim 4 or 5, wherein the preset list is configured to indicate:
a frequency band combination that generates interference or has the possibility of generating interference; or
the frequency band combination that generates interference or has the possibility of generating interference, and a frequency range that is interfered with or is possible to be interfered with; or
the frequency band combination that generates interference or has the possibility of generating interference, the frequency range that is interfered with or is possible to be interfered with, and an interference type; or
the frequency band combination that generates interference or has the possibility of generating interference, and the interference type; or
the interference type, and the frequency range that is interfered with or is possible to be interfered with.

## Patentansprüche

1. Drahtloskommunikationsverfahren, **dadurch gekennzeichnet, dass** es umfasst:
Bestimmen (210), durch eine Endgerätevorrichtung, dass ein erstes Signal und ein zweites Signal eine Möglichkeit haben, Selbstinterferenz auf der Endgerätevorrichtung gemäß einer voreingestellten Liste durch eine numerische Beziehung zwischen einem Frequenzband, das von einem ersten Träger belegt ist, und einem Frequenzband, das von einem zweiten Träger belegt ist, zu erzeugen, wobei die voreingestellte Liste dazu konfiguriert ist, eine Selbstinterferenzbedingung zwischen dem durch den ersten Träger belegten Frequenzband und dem durch den zweiten Träger belegten Frequenzband anzugeben, das erste Signal ein zwischen der Endgerätevorrichtung und einer ersten Netzwerkvorrichtung unter Verwendung des ersten Trägers zu übertragendes Signal ist, das zweite Signal ein zwischen der Endgerätevorrichtung und einer zweiten Netzwerkvorrichtung unter Verwendung des zweiten Trägers zu übertragendes Signal ist, und die Übertragung des ersten Signals und die Übertragung des zweiten Signals zumindest teilweise zeitlich überlappend stattfinden; und
Übertragen (220) von ersten Informationen durch die Endgerätevorrichtung an die erste Netzwerkvorrichtung, um die erste Netzwerkvorrichtung zu aktivieren, gemäß den ersten Informationen die Endgerätevorrichtung zu konfigurieren und/oder mit der zweiten Netzwerkvorrichtung eine Konfiguration durch die zweite Netzwerkvorrichtung für die Endgerätevorrichtung zu verhandeln, wobei die ersten Informationen dazu konfiguriert sind, anzugeben, dass das erste Signal und das zweite Signal die Möglichkeit haben, Selbstinterferenzen auf der Endgerätevorrichtung zu erzeugen, und eine Konnektivitätsweise einer Kommunikationskonnektivität zwischen der Endgerätevorrichtung und der zweiten Netzwerkvorrichtung unter Verwendung des zweiten Trägers und/oder Duplexinformationen einer Kommunikation zwischen der Endgerätevorrichtung und der zweiten Netzwerkvorrichtung unter Verwendung des zweiten Trägers und/oder Planungsinformationen einer Planung durch die zweite Netzwerkvorrichtung für die Endgerätevorrichtung auf dem zweiten Träger anzugeben.

2. Verfahren nach Anspruch 1, wobei das erste Signal ein Uplink-Signal ist, das von der Endgerätevorrichtung unter Verwendung des ersten Trägers an die erste Netzwerkvorrichtung übertragen wird, und das zweite Signal ein Downlink-Signal von der zweiten Netzwerkvorrichtung ist, das von der Endgerätevorrichtung unter Verwendung des zweiten Trägers empfangen wird; oder
das erste Signal ein Downlink-Signal von der ersten Netzwerkvorrichtung ist, das von der Endgerätevorrichtung unter Verwendung des ersten Trägers empfangen wird, und das zweite Signal ein Uplink-Signal ist, das von der Endgerätevorrichtung unter Verwendung des zweiten Trägers an die zweite Netzwerkvorrichtung übertragen wird.

3. Verfahren Anspruch 1 oder 2, wobei die voreingestellte Liste dazu konfiguriert ist:
eine Frequenzbandkombination, die Selbstinterferenzen erzeugt oder die Möglichkeit hat, Selbstinterferenzen zu erzeugen; oder
die Frequenzbandkombination, die eine Selbstinterferenz erzeugt oder die Möglichkeit hat, eine Selbstinterferenz zu erzeugen, ein Frequenzbereich, der gestört wird oder gestört werden kann; oder
die Frequenzbandkombination, die eine Selbstinterferenz erzeugt oder die Möglichkeit hat, eine Selbstinterferenz zu erzeugen, den Frequenzbereich, der gestört wird oder gestört werden kann, und eine Interferenzart; oder
die Frequenzbandkombination, die Selbstinterferenzen erzeugt oder die Möglichkeit hat, Selbstinterferenzen zu Typ erzeugen, und die Interferenzart; oder
die Interferenzart und den Frequenzbereich, der gestört wird oder gestört werden kann,
anzugeben.

4. Endgerätevorrichtung, **dadurch gekennzeichnet, dass** sie umfasst: eine Verarbeitungseinheit (410) und eine Kommunikationseinheit (420), wobei,
die Verarbeitungseinheit (410) dazu konfiguriert ist, zu bestimmen, dass ein erstes Signal und ein zweites Signal eine Möglichkeit haben, Selbstinterferenz auf der Endgerätevorrichtung gemäß einer voreingestellten Liste durch eine numerische Beziehung zwischen einem Frequenzband, das von einem ersten Träger belegt ist, und einem Frequenzband, das von einem zweiten Träger belegt ist, zu erzeugen, wobei die voreingestellte Liste dazu konfiguriert ist, eine Selbstinterferenzbedingung zwischen dem durch den ersten Träger belegten Frequenzband und dem durch den zweiten Träger belegten Frequenzband anzugeben, das erste Signal ein zwischen der Endgerätevorrichtung und einer ersten Netzwerkvorrichtung unter Verwendung des ersten Trägers zu übertragendes Signal ist, das zweite Signal ein zwischen der Endgerätevorrichtung und einer zweiten Netzwerkvorrichtung unter Verwendung des zweiten Trägers zu übertragendes Signal ist, und die Übertragung des ersten Signals und die Übertragung des zweiten Signals zumindest teilweise zeitlich überlappend stattfinden; und
Die Kommunikationseinheit (420) dazu konfiguriert ist, erste Informationen an die erste Netzwerkvorrichtung zu übertragen, um die erste Netzwerkvorrichtung zu aktivieren, gemäß den ersten Informationen die Endgerätevorrichtung zu konfigurieren und/oder mit der zweiten Netzwerkvorrichtung eine Konfiguration durch die zweite Netzwerkvorrichtung für die Endgerätevorrichtung zu verhandeln, wobei die ersten Informationen dazu konfiguriert sind, anzugeben, dass das erste Signal und das zweite Signal die Möglichkeit haben, Selbstinterferenzen auf der Endgerätevorrichtung zu erzeugen, und eine Konnektivitätsweise einer Kommunikationskonnektivität zwischen der Endgerätevorrichtung und der zweiten Netzwerkvorrichtung unter Verwendung des zweiten Trägers und/oder Duplexinformationen einer Kommunikation zwischen der Endgerätevorrichtung und der zweiten Netzwerkvorrichtung unter Verwendung des zweiten Trägers und/oder Planungsinformationen einer Planung durch die zweite Netzwerkvorrichtung für die Endgerätevorrichtung auf dem zweiten Träger anzugeben.

5. Endgerätevorrichtung nach Anspruch 4, wobei das erste Signal ein Uplink-Signal ist, das von der Endgerätevorrichtung unter Verwendung des ersten Trägers an die erste Netzwerkvorrichtung übertragen wird, und das zweite Signal ein Downlink-Signal von der zweiten Netzwerkvorrichtung ist, das von der Endgerätevorrichtung unter Verwendung des zweiten Trägers empfangen wird; oder
das erste Signal ein Downlink-Signal von der ersten Netzwerkvorrichtung ist, das von der Endgerätevorrichtung unter Verwendung des ersten Trägers empfangen wird, und das zweite Signal ein Uplink-Signal ist, das von der Endgerätevorrichtung unter Verwendung des zweiten Trägers an die zweite Netzwerkvorrichtung übertragen wird.

6. Endgerätvorrichtung nach Anspruch 4 oder 5, wobei die voreingestellte Liste dazu konfiguriert ist:
eine Frequenzbandkombination, die Interferenzen erzeugt oder die Möglichkeit hat, Interferenzen zu erzeugen; oder
die Frequenzbandkombination, die eine Interferenz erzeugt oder die Möglichkeit hat, eine Interferenz zu erzeugen, und ein Frequenzbereich, der gestört wird oder gestört werden kann; oder
die Frequenzbandkombination, die eine Interferenz erzeugt oder die Möglichkeit hat, eine Interferenz zu erzeugen, den Frequenzbereich, der gestört wird oder gestört werden kann, und eine Interferenzart; oder
die Frequenzbandkombination, die Interferenzen erzeugt oder die Möglichkeit hat, Interferenzen zu Typ erzeugen, und die Interferenzart; oder
die Interferenzart und den Frequenzbereich, der gestört wird oder gestört werden kann,
anzugeben.

## Revendications

1. Procédé de communication sans fil, **caractérisé en ce qu'**il comprend :
la détermination (210), par un dispositif terminal, du fait qu'un premier signal et un deuxième signal sont susceptibles de générer de l'auto-interférence sur le dispositif terminal selon une liste prédéfinie grâce à une relation numérique entre une bande de fréquences occupée par une première porteuse et une bande fréquences occupée par une deuxième porteuse, la liste prédéfinie étant configurée pour indiquer une condition d'auto-interférence entre la bande de fréquences occupée par la première porteuse et la bande de fréquences occupée par la deuxième porteuse, le premier signal étant un signal à transmettre entre le dispositif terminal et un premier dispositif de réseau en utilisant la première porteuse, le deuxième signal étant un signal à transmettre entre le dispositif terminal et un deuxième dispositif de réseau en utilisant la deuxième porteuse, et la transmission du premier signal et la transmission du deuxième signal se faisant au moins partiellement en chevauchement dans le temps ; et
la transmission (220), par le dispositif terminal, de premières informations au premier dispositif de réseau pour permettre au premier dispositif de réseau, en fonction des premières informations, de configurer le dispositif terminal et/ou de négocier avec le deuxième dispositif de réseau une configuration par le deuxième dispositif de réseau pour le dispositif terminal, les premières informations étant configurées pour indiquer que le premier signal et le deuxième signal sont susceptibles de générer de l'auto-interférence sur le dispositif terminal, et indiquer au moins l'un d'un mode de connectivité d'une connectivité de communication entre le dispositif terminal et le deuxième dispositif de réseau en utilisant la deuxième porteuse, d'informations de duplex d'une communication entre le dispositif terminal et le deuxième dispositif de réseau en utilisant la deuxième porteuse et d'informations d'ordonnancement d'un ordonnancement effectué par le deuxième dispositif de réseau pour le dispositif terminal sur la deuxième porteuse.

2. Procédé selon la revendication 1, dans lequel le premier signal est un signal de liaison montante transmis par le dispositif terminal au premier dispositif de réseau en utilisant la première porteuse, et le deuxième signal est un signal de liaison descendante provenant du deuxième dispositif de réseau reçu par le dispositif terminal en utilisant la deuxième porteuse ; ou
le premier signal est un signal de liaison descendante provenant du premier dispositif de réseau reçu par le dispositif terminal en utilisant la première porteuse, et le deuxième signal est un signal de liaison montante transmis par le dispositif terminal au deuxième dispositif de réseau en utilisant la deuxième porteuse.

3. Procédé selon la revendication 1 ou 2, dans lequel la liste prédéfinie est configurée pour indiquer :
une combinaison de bandes de fréquences qui génère de l'auto-interférence ou qui est susceptible de générer de l'auto-interférence ; ou
la combinaison de bandes de fréquences qui génère de l'auto-interférence ou qui est susceptible de générer de l'auto-interférence, une plage de fréquences qui subit des interférences ou qui est susceptible de subir des interférences ; ou
la combinaison de bandes de fréquences qui génère de l'auto-interférence ou qui est susceptible de générer de l'auto-interférence, la plage de fréquences qui subit des interférences ou qui est susceptible de subir des interférences, et un type d'interférence ; ou
la combinaison de bandes de fréquences qui génère de l'auto-interférence ou qui est susceptible de générer de l'auto-interférence, et le type d'interférence ; ou
le type d'interférence, et la plage de fréquences qui subit des interférences ou qui est susceptible de subir des interférences.

4. Dispositif terminal, **caractérisé en ce qu'**il comprend : une unité de traitement (410) et une unité de communication (420) ;
l'unité de traitement (410) étant configurée pour : déterminer qu'un premier signal et un deuxième signal sont susceptibles de générer de l'auto-interférence sur le dispositif terminal selon une liste prédéfinie grâce à une relation numérique entre une bande de fréquences occupée par une première porteuse et une bande fréquences occupée par une dispositif porteuse, la liste prédéfinie étant configurée pour indiquer une condition d'auto-interférence entre la bande de fréquences occupée par la première porteuse et la bande de fréquences occupée par la deuxième porteuse, le premier signal étant un signal à transmettre entre le dispositif terminal et un premier dispositif de réseau en utilisant la première porteuse, le deuxième signal étant un signal à transmettre entre le dispositif terminal et un deuxième dispositif de réseau en utilisant la deuxième porteuse, et la transmission du premier signal et la transmission du deuxième signal se faisant au moins partiellement en chevauchement dans le temps ; et
l'unité de communication (420) étant configurée pour : transmettre les premières informations au premier dispositif de réseau pour permettre au premier dispositif de réseau, en fonction des premières informations, de configurer le dispositif terminal et/ou de négocier avec le deuxième dispositif de réseau une configuration par le deuxième dispositif de réseau pour le dispositif terminal, les premières informations étant configurées pour indiquer que le premier signal et le deuxième signal sont susceptibles de générer de l'auto-interférence sur le dispositif terminal, et indiquer au moins l'un d'un mode de connectivité d'une connectivité de communication entre le dispositif terminal et le deuxième dispositif de réseau en utilisant la deuxième porteuse, d'informations de duplex d'une communication entre le dispositif terminal et le deuxième dispositif de réseau en utilisant la deuxième porteuse et d'informations d'ordonnancement d'un ordonnancement effectué par le deuxième dispositif de réseau pour le dispositif terminal sur la deuxième porteuse.

5. Dispositif terminal selon la revendication 4, dans lequel le premier signal est un signal de liaison montante transmis par le dispositif terminal au premier dispositif de réseau en utilisant la première porteuse, et le deuxième signal est un signal de liaison descendante provenant du deuxième dispositif de réseau reçu par le dispositif terminal en utilisant la deuxième porteuse ; ou
le premier signal est un signal de liaison descendante provenant du premier dispositif de réseau reçu par le dispositif terminal en utilisant la première porteuse, et le deuxième signal est un signal de liaison montante transmis par le dispositif terminal au deuxième dispositif de réseau en utilisant la deuxième porteuse.

6. Dispositif terminal selon la revendication 4 ou 5, dans lequel la liste prédéfinie est configurée pour indiquer :
une combinaison de bandes de fréquences qui génère des interférences ou qui est susceptible de générer des interférences ; ou
la combinaison de bandes de fréquences qui génère des interférences ou qui est susceptible de générer des interférences, une plage de fréquences qui subit des interférences ou est qui susceptible de subir des interférences ; ou
la combinaison de bandes de fréquences qui génère des interférences ou qui est susceptible de générer des interférences, une plage de fréquences qui subit des interférences ou est qui susceptible de subir des interférences, et un type d'interférence ; ou
la combinaison de bandes de fréquences qui génère des interférences ou qui est susceptible de générer des interférences, et le type d'interférence ; ou
le type d'interférence, et la plage de fréquences qui subit des interférences ou qui est susceptible de subir des interférences.
